# EUROPEAN PATENT SPECIFICATION

(11) **EP 1 466 659 B1**
(45) Date of publication and mention of the grant of the patent: **30.06.2010**
(21) Application number: 03076045.8
(22) Date of filing: 10.04.2003
(51) Int. Cl.: B01D 67/00

(54) **A process for drying a wet porous membrane structure**
Verfahren zum Trocknen einer feuchten porösen Membranstruktur
Procédé de séchage d'une structure de membrane poreuse humide

(43) Date of publication of application: 13.10.2004
(73) Proprietor: X-Flow B.V., 7547 TC Enschede (NL)
(72) Inventor: He, Tao, 7558 JL Hengelo (NL); Blume, Ingo, 7555 ND Hengelo (NL)
(74) Representative: Kupecz, Arpad

(56) References cited:
- EP-A- 0 604 883
- EP-A- 0 992 277
- US-A- 3 994 860
- US-A- 5 385 670
- PATENT ABSTRACTS OF JAPAN vol. 009, no. 074 (C-273), 3 April 1985 (1985-04-03) & JP 59 206011 A (DAICEL KAGAKU KOGYO KK), 21 November 1984 (1984-11-21) -& DATABASE WPI Section Ch, Week 198502 Derwent Publications Ltd., London, GB; Class A32, AN 1985-008820 XP002251558 & JP 59 206011 A (DAICEL CHEM IND LTD), 21 November 1984 (1984-11-21)

## Description

### Background of the Invention

The present invention relates to a process for drying a wet porous membrane structure.

The US patent No. 5,385,670 (McDonogh et al.) discloses a similar process for drying wet porous membranes. According to the above US patent the pores of an ultrafiltration membrane are at least partially filled with a solution of a water soluble organic solid in an organic solvent. Then said membranes are dried whereas at least a portion of said organic solid remains within said pores upon drying.

Said water soluble organic solids used are expediently organic acids or alkalimetal salts thereof, particularly sodium or potassium salts. Expedient examples of these are ascorbic acid, citric acid and the alkalimetal salts thereof, such as sodium ascorbate, sodium citrate, sodium dihydrogen citrate or disodium hydrogen citrate. Sorbic acid and the alkalimetal salts thereof are also able to be used.

European patent EP 604833 (Wagener et al) discloses a method using mixtures of one or more polymers out of the native wet hydrophilic polymers, like polyethylenimide, polyvinylpyrrolidone, polyethylenglycol or polyvinylalcohol and one or more electrolytes, like sodium chloride, potassium acetate, sodium dodecylsulphate, lithium sulphate, etc. The water in the pores is evaporated after filling the membrane with the aqueous solution of the above mixture. The resulted membranes show significant flux decrease while maintaining the retention.

Another well-known and mostly practised method is to fill the membrane pores with glycerol or glycerol-like chemicals prior drying as, for example, WO 02076593. After immersion in a glycerol or glycerol-like chemical water solution, the membrane is dried at certain temperature. Due to the difference in volatility, water evaporates and the solute is left inside the pores to prevent any further collapse. Upon application, the glycerol is washed out of the pores in order to restore the original permeability of the membranes. However, in practice, the wet permeability can not be realised after drying, due to the partial collapse of some effective pores. The use of glycerol in membrane drying has additional disadvantage that the membrane absorbs glycerol and can affect the membrane structure. Furthermore because of the absorption of glycerol by the membrane it is difficult to wash out said glycerol from the membrane satisfactorily.

Also JP 62049908 (Yanagimota Takeshi) relates to a process for drying a wet porous membrane structure which is based on a solvent exchange. According to said process a three step solvent exchange drying procedure is carried out as follows: the wet membrane is washed a few times with a non-solvent that has lower interfacial tension with air, usually ethanol. Then the washed membrane is put in a bath with the same non-solvent. Afterwards a second liquid replacement step is carried out with another non-solvent possessing a lower interfacial tension for air than the former non-solvent. Hexane or also cyclo hexane is used in many cases as secondary non-solvent, wherein the membrane is immersed in said solvent at 10-30 °C for 10-30 hrs. The last step is drying with air at 30-50 °C for 10-30 hrs. In this case the interfacial tension should be small enough so that evaporating the liquid does not result in too big changes of membrane morphology. When rewetting the membrane, it should be taken into account that the same problems with interfacial tensions occur. Rewetting by just flushing water through the dry membrane can result in irreversible damage.

Similar work has been presented in US patent No. 3 842 515 (MacDonald et al), in which water-soluble alcohol and consequently nonpolar alcohol-soluble organic liquid are specifically used. In US patent No. 4 080 743 (Manos), a membrane in which the polymer has a critical surface tension of at least 42 dynes per centimeter contacts with at least one replacement liquid consisting essentially of a homogeneous solution of (i) a major portion of at least one organic solvent selected from the class consisting of hydrocarbons having

### Summary of the Invention

In the preparation of membranes the drying step of the membranes is one of the most critical factors. Wet membranes are difficult for storage and are not suitable for module production. If the membrane is dries without any pretreatment, the pores may collapse and the flux may be reduced significantly. It is known that pore collapse is the result of the loss of filler liquid, usually water, which was initially introduced into the pores, which created a high attraction pressure upon the polymer chains. To prevent or withstand the high pressure enforced on the polymer chains, a kind of pore filler may be used in a post-treatment step. In this post-treatment step, the membrane is immersed into a solute/solvent mixture. Then the solute/solvent mixture will replace the initial solvent inside the membrane pores after certain immersion time (or steeping time). Then, the solvent is dried out from the pores and the solute remains behind as the pore-filler.

Usually the type of pore fillers varies from organic small molecules i.e. glycerol, ethylene glycol, citric acid, to organic polymers, i.e. PVP, PEI, PVA. However, the pores usually collapse upon drying, resulting in lower flux than the initial one.

It is therefore the object of the present invention to provide a process for drying a wet porous membrane structure wherein the above-mentioned disadvantages of the mentioned prior art methods are eliminated.

Accordingly the present invention provides a process for drying a wet porous membrane structure, characterised by the steps as defined in claim 1.

In the process of the present invention one uses as pore filler a solution of a water soluble chemical in an organic or inorganic solvent.

The pores of the membranes are completely filled with said solution, which may be achieved by simply immersing the porous membrane in the solution of a water soluble chemical in an inorganic solvent optionally mixed with an organic solvent until the pores are entirely filled.

Usually as organic solvent one uses an alcohol such as methanol, ethanol, 1-propanol, 1-butanol or tertubutanol according to the present invention. The above alcohols may be used in admixtures of water. However, as an inorganic solvent is used water, which is cheap and does not affect the environment.

Finally the water may be partially removed from the pores due to the combination of the controlled drying environment and the solute.

Surprisingly the obtained final product, which is partially solved, keeps its original flux or permeability and mechanical properties.

Generally as water soluble chemical one uses an inorganic salt such as a salt composed of cations from group IA alkali group, IIA alkali earth group from the Periodic System, an anion of hydroxide, acetate, chloride, carbonate, bromide, sulphate, nitrate or phosphate.

The porous membrane structure of the present invention is usually made from polysulfone, polyethersulfone, polyetherimide, poluamide, polyvinylidiene fluoride, or poly-acrylnitrile.

The drying step is carried out in a controlled environment under sub-atmospheric, atmospheric or superatmospheric pressure, at certain temperature usually at about 23-100 °C and a certain relative humidity, which is generally lower than the relative humidity and higher than 20%.

Usually the pores in the porous membrane of the invention have a pore size of 1 to 200 nm. The porous membrane of the invention may be flat, hollow fiber, or tubular.

soluble chemical in an organic or inorganic solvent until the pores are entirely filled.

Usually as organic solvent one uses an alcohol such as methanol, ethanol, 1-propanol, 2-propanol, 1-butanol 2-butanol or tert-butanol according to the present invention. The above alcohols may be used in admixtures of water. However, preferably an inorganic solvent is used and especially water, which is cheap and does not affect the environment.

Finally the water may be partially removed from the pores due to the combination of the controlled drying environment and the solute.

Surprisingly the obtained final product, which is partially dried, keeps its original flux or permeability and mechanical properties.

Generally as water soluble chemical one uses an inorganic salt such as a salt composed of a cation from group IA alkali group, IIA alkaline earth group and IIB group from the Periodic Table Of The Elements, and an anion of hydroxide, acetate, chloride, carbonate, bromide, sulphate, nitrate or phosphate.

The porous membrane structure of the present invention is generally manufactured from polyether sulfone polymers optionally mixed with inorganics.

The drying step is carried out in a specifically controlled environment under sub-atmospheric, atmospheric or super-atmospheric pressure, at certain temperature at 50-51°C and a certain relative humidity, in the range of 39-43.

A typical pore size of the present invention is in the range of 1 to 200 nm. The porous membrane of the invention may be flat, hollow fiber (single and multi channel), or tubular and the like.

Last but not the least the porous membrane structure may have the form of a sheet, hollow fiber (single and multi channel) or tube and the like obtained from the present process.

The present drying process has advantages over the discussed prior art drying process, such as solvent exchange, supercritical CO₂, heat treatment and the other pore-filling processes. We claim that the present invention is economic and environmentally friendly as detailed in the following.

Normally, the pore fillers in the ultrafiltration membranes contain organic chemicals, like glycerol. In a large water treatment plant provided with ultrafiltration membrane installations, health and environment problems arise due to the leaching of glycerol in this case into the water. Therefore, before the production of drinking water, the impregnated chemicals have to be flushed out of the membrane pores to obtain the original water flux as well as to prevent the high concentration of chemicals in the drinking water. Tremendous amount of drinking water, ultrafiltration permeate or even sometimes reverse osmosis water has to be used for the start-up of the whole plant, which creates extra cost. The effluent of the cleaning process is wastewater, which has to be treated in a special device prior to discharge, which is costly as well. Furthermore, the organic filler chemicals are carbon-oxygen-demand (COD) chemicals and detrimental to the environment. However, by using CaCl₂, the usage of the cleaning water for the membranes is less than using organic chemicals as the pore filler. The water plant does not have to pay for the discharge of the cleaning water into the river or lakes because CaCl2 is a environmentally friendly chemical. As an example, CaCl2 is widely applied in de-icing of the road during the winter seasons in many countries.

Better quality in terms of permeability of the final dried membrane is the other merit of the present invention. Because of a particularly controlled drying environment in terms of temperature and humidity, the final product is much more homogenous in terms of permeability than in the case of the prior art using for instance glycerol. In the present invention, the particularly controlled drying process allows the membrane to be partially dried without changing any essential properties of the original membranes. Since the final membrane is not completely dried, there is still some solution remaining inside the pores which keeps the membrane partially wet and retains the original wet flux as well as the flexibility after the drying process ends. It is not possible in the prior art, where the membranes are normally complete dried due to the non-specifically controlled temperature and humidity and loss of permeability and mechanical properties may occur. Because the applied inorganic salts have the capability to retain water, the membrane is constantly in a partially wet state, provided that the temperature and humidity are within the allowable range. Thus, the storage of the membrane arise no problem at all.

Another advantage of the new invention addresses the safety control of the process. Once the temperature and humidity are set at required values, the obtained final partially dried membrane will be in equilibrium with the drying environment. Thus, an extended drying time does not alter any membrane properties.

### Theoretical background of the invention

Taking water as the solvent, it is our purpose to bring the dilute solution in the membrane pores to a concentrated solution via the present drying process. Basically, drying of the solution is a purely water evaporation process due to the chemical potential gradient of water between the solution and air. If the chemical potential of water in air is lower than that in the solution, the evaporation will continue, and the solution will lose water until the chemical potential in the solution reaches the same point as that in air.

At the final state of the drying, if one water molecule leaves the solution, one water molecule goes back to the solution from the atmosphere, which means that there is an equilibrium between the solution and the drying environment. At the mean time, the solution concentration is stable.

Above information teaches us that the chemical potential of water in the atmosphere is a crucial parameter to adjust the concentration of a solution in the drying process. We state here that at equilibrium, the value of the activity of water in the solution is equal to the value of the relative humidity of the air.

For crystallizable solutes, we have to take care that the solution will not start phase separation during the drying process. Formation of any crystals in the membrane pores attributes the membrane brittleness. In order to prevent the crystallizable solute phase separates, we need to control either the solute activity or solvent activity in a range where no phase separation takes place. Or in the other words, we have to control the solution concentration to be lower than the saturation concentration at the set temperature. This can be easily accomplished by controlling the temperature and humidity of the drying environment. For using calcium chloride as the solute and water as the solvent, we have to keep the humidity of the air in the drying environment higher than 20% at 50 °C. If the humidity is lower than that, the solution will phase separate and CaCl₂ crystals will form. .

Instead of using water, the mixture of water and alcohol can be used as the solvent as well.

The invention will be explained in more detail by means of the following not limited examples.

### Example 1

This example demonstrates that the present invention is applicable for polyethersulfone (PES) ultrafiltration membrane (molecular cutoff for PVP of 150-200 kDa) with an inner diameter of 0.8 mm. A bundle of ultrafiltration membrane PES UFC (X-Flow B.V.) having an average wet membrane flux of 1140 1. m⁻² . hr⁻¹. bar⁻¹ was immersed in a CaCl₂ water solution at weight concentration of 16.7% at room temperature (23 °C) for 60 min. The membrane was then taken out of the solution and kept vertically in ambient for 2 hours to remove the excessive amount of CaCl₂ solution. In the next step, the membrane was brought into a dryer. The temperature and relative humidity of the air at the inlet of the dryer was controlled at 51 °C and 43% respectively. After 24 hours, the membrane was removed from the dryer. The membrane feels dry from the outside and very flexible. This membrane showed pure water flux of 1110 1. m⁻² . hr⁻¹. bar⁻¹.

### Example 2

This example demonstrates that the present invention is applicable for a PES UFM (X-Flow B.V.) membrane (molecular weight cut-off for PVP of 50-100kDa) with an inner diameter of 1.5 mm. By following the same immersing procedure as Example 1, the membrane was dried in a dryer with the inlet air temperature and humidity of 50 °C and 39% respectively. The final membrane flux was 620 1. m⁻² . hr⁻¹. bar^{-1,} compared with the wet flux 740 1. m⁻² . hr⁻¹. bar⁻¹.

### Example 3

This example demonstrates that the present invention is applicable for not only PES in capillary from but also for PVDF in tubular form. PVDF tubular membrane F4385 (X-Flow B.V.) layer with an inner diameter of 5.2 mm. By following the same immersing procedure as above, the membrane was dried under controlled temperature and humidity of 51 °C and 39% respectively. The final membrane had a pure water flux of 910 1. m⁻² . hr⁻¹. bar⁻¹, compared to the wet flux of 990 1. m⁻² . hr⁻¹. bar⁻¹.

### Comparison Example 4

This example demonstrates the importance of the temperature and humidity of the drying environment for permeability and mechanical properties of the final membrane. Following the same immersing (steeping) procedure as in example 1 with a CaCl₂ solution. The membranes were then brought into an oven at controlling parameters as indicated in Table 1.

**Table 1**

| Drying environment | | Drying time | Flux (1.m⁻².hr⁻¹.bar⁻¹) | | Retention on flux (%) | Mechanical properties |
|---|---|---|---|---|---|---|
| T (°C) | RH(%) | (hr) | Wet state | Dry state | | |
| 51 | 43 | 24 | 1140 | 1110 | 97 | Flexible |
| 50 | <20 | 21 | 1000 | 180-200 | 18-20 | Brittle |

As shown in Table 1, the combination of temperature and humidity is very important to dry the membranes into a state where both the flux and mechanical properties are maintained.

### Comparison Example 5

This example is to prove that the present invention is better than the prior art. PES UF membranes of an inner diameter of 0,8 mm were used as the initial wet sample. One membrane was subjected to the immersing (steeping) process as in example 1 and the other membrane was subjected to an immersing process using glycerol instead of CaCl₂ at a concentration of about 20 wt% for a steeping time of 70 min. Afterwards, the glycerol immersed membrane was brought into a dryer connected with an air-circulated system. The temperature at the inlet was 50 °C. After drying for 36 hours, the membrane was characterized. Table 2 lists the values for the compared properties between the above two membranes.

**Table 2**

| Steeping Solute | Drying environment | | Drying time | Flux (1.m⁻² hr⁻¹.bar⁻¹) | | Flux |
|---|---|---|---|---|---|---|
| | T (°C) | RH (%) | (hr) | Wet state | Dry state | Retention (%) |
| CaCl₂ | 51 | 43 | 24 | 1140 | 1110 | 97 |
| Glycerol | 50 | -- | 36 | 1170 | 450 | 39 |

Above data show obviously that the new method gives higher flux and shorter drying time compared with the classical method.

## Claims

1. A process for drying a wet porous polyethersulfone membrane structure, **characterised by** the steps of:
providing a wet porous membrane structure;
filling the pores of said porous membrane structure with an aqueous solution of 16.7% CaCl₂ by immersing the same in said aqueous CaCl₂ during 60 min. at 23°C; and
drying said porous membrane structure at a temperature of 50-51°C and a humidity of 39-43% during 24h while at least a portion of said solution of said water soluble chemical in said organic or inorganic solvent remains within said pores of said membrane structure upon drying.

2. The process of claim 1, wherein said aqueous solution contains an alcohol, selected from the group consisting of methanol, ethanol, 1-propanol, 2-propanol, 1-butanol, 2-propanol or tert-butanol.

3. The process of claims 1 or 2, wherein the porous membrane structure is generally manufactured from polyethersulfone polymers mixed with inorganics.

4. The process of claims 1-3, wherein the said porous membrane structure consists of active pores of diameters in the range of 1 nm to 200 nm.

5. The process of claims 1-4, wherein the porous membrane structure is in the form of flat sheet, hollow fiber (single or multi channel), or a tubular structure and the like.

## Patentansprüche

1. Verfahren zum Trocknen einer feuchten porösen Polyethersulfon-Membranstruktur, **gekennzeichnet durch** die Verfahrensschritte:
Bereitstellen einer feuchten porösen Membranstruktur,
Füllen der Poren der porösen Membranstruktur mit einer wässrigen Lösung von 16,7 % CaCl₂ **durch** Eintauchen der Membranstruktur in das wässrige CaCl₂ über einen Zeitraum von 60 min bei 23 °C, und
Trocknen der porösen Membranstruktur bei einer Temperatur von 50 bis 51 °C und einer Feuchte von 39-43 % über einen Zeitraum von 24 h,
wobei bei der Trocknung wenigstens ein Teil der Lösung des wasserlöslichen chemischen Stoffes in dem organischen oder anorganischen Lösemittel in den Poren der Membranstruktur verbleibt.

2. Verfahren nach Anspruch 1, bei welchem die wässrige Lösung einen Alkohol enthält, der aus der Gruppe ausgewählt ist, welche aus Methanol, Ethanol, 1-Propanol, 2-Propanol, 1-Butanol, 2-Propanol oder tert-Butanol besteht.

3. Verfahren nach Anspruch 1 oder 2, bei welchem die poröse Membranstruktur im Allgemeinen aus Polyethersulfonpolymeren, in Mischung mit anorganischen Substanzen, hergestellt wird.

4. Verfahren nach den Ansprüchen 1-3, bei welchem die poröse Membranstruktur aus aktiven Poren besteht, welche einen Durchmesser im Bereich von 1 nm bis 200 nm aufweisen.

5. Verfahren nach den Ansprüche 1-4, bei welchem die poröse Membranstruktur in Form einer Flachfolie, Hohlfaser (Einkanal oder Multikanal) oder einer rohrförmigen Struktur oder dergleichen vorliegt.

## Revendications

1. Procédé de séchage d'une structure de membrane en poly(éthersulfone) poreuse humide, **caractérisé par** les étapes consistant à :
fournir une structure de membrane poreuse humide ;
remplir les pores de ladite structure de membrane poreuse avec une solution aqueuse de CaCl₂ à 16,7 % en l'immergeant dans ledit CaCl₂ aqueux pendant 60 min à 23 °C ; et
sécher ladite structure de membrane poreuse à une température de 50 à 51 °C et une humidité de 39 à 43 % pendant 24 h, tandis qu'au moins une portion de ladite solution dudit produit chimique soluble dans l'eau se trouve dans ledit solvant organique ou inorganique demeure dans lesdits pores de ladite structure de membrane au moment du séchage.

2. Procédé selon la revendication 1, dans lequel ladite solution aqueuse contient un alcool, choisi dans le groupe constitué par le méthanol, l'éthanol, le 1-propanol, le 2-propanol, le 1-butanol, le 2-propanol ou le *tert*-butanol.

3. Procédé selon la revendication 1 ou 2, dans lequel la membrane de structure poreuse est généralement fabriquée à partir de polymères de poly(éthersulfone) mélangés avec des éléments inorganiques.

4. Procédé selon les revendications 1 à 3, dans lequel ladite structure de membrane poreuse est constituée de pores actifs de diamètres dans la plage de 1 nm à 200 nm.

5. Procédé selon les revendications 1 à 4, dans lequel la structure de membrane poreuse se présente sous la forme d'une feuille plate, d'une fibre creuse (à canal unique ou à canaux multiples), ou d'une structure tubulaire et similaires.
